# EUROPEAN PATENT SPECIFICATION

(11) **EP 4 636 265 B1**
(45) Date of publication and mention of the grant of the patent: **02.12.2026**
(21) Application number: 24382416.6
(22) Date of filing: 18.04.2024
(51) Int. Cl.: F16B 5/02

(54) **CONNECTION SYSTEM WITH AN ELLIPTICAL CROSS-SECTION**
VERBINDUNGSSYSTEM MIT ELLIPTISCHEM QUERSCHNITT
SYSTÈME DE LIAISON À SECTION ELLIPTIQUE

(43) Date of publication of application: 22.10.2025
(73) Proprietor: Airbus Operations, S.L.U., 28906 Getafe (ES)
(72) Inventor: MARTÍN CALVO, David, 28905 Getafe (ES); SOLA CASADO, Esther, 28905 Getafe (ES); JIMENEZ NUÑEZ, Joaquin Andres, 28905 Getafe (ES); GOMEZ VIZCAINO, Raul José, 28905 Getafe (ES); COLMENAREJO MATELLANO, Nuria, 28905 Getafe (ES)

(56) References cited:
- US-A- 3 835 615

## Description

The invention relates to the technical field of systems for connection between structural elements. More specifically, it relates to connections between panels in the aeronautical sector.

Many systems are known for connection between two structures having a hole for the insertion of an element of a connection system.

For example, screwed structural connections are known. These connections have the disadvantage that they need the elements to be connected to be located in a precise aligned position since this type of connection does not make it possible to absorb misalignments. Moreover, these connections do not make it possible to control the load transmitted during assembly and dismantling of the connection system. Furthermore, sometimes it is difficult to dismantle the system as it is necessary to have access to both sides of the connection system, which is not always possible or easy.

Connections of clearance fit type are also known. Said connections have the disadvantage that they do not have the capacity to absorb misalignments between the elements to be connected and it is also not possible to control the load transmitted by the connection system when assembling and dismantling the latter. Furthermore, with this connection system the bolt may have a loose fit, with poor transfer of loads precisely because of the clearance fit.

Quick couplings are also known. This type of connection does make it possible to absorb misalignments, to a small degree, between the elements to be connected. However, this type of connection also has the disadvantage of a loose fit of the bolt and poor transfer of loads. They have the further disadvantage of needing to be installed perpendicularly since they are installed in the direction of the threaded portion, which is perpendicular to the connection and cannot be inclined.

Fixings with a conical sleeve are also known. This type of fixing can absorb slight misalignments, but it requires that the holes in the elements to be connected be conical.

For example, document US 3 835 615 describes a joint assembly comprising two work pieces with aligned holes for the insertion of a fastener. The fastener comprises a threaded shank with a head and a nut. The fastener also comprises an adapter with a sleeve that can be placed around the shank and in the aligned holes of the two work pieces. In some embodiments, the fastener has a tapered shape. However, and as mentioned above, in such embodiments, the aligned holes need to also have tapered shapes to ensure a good joint assembly.

Also known are connection systems which are used in doors in the aeronautical sector, such as door locks. These systems have the disadvantage that they cannot absorb structural loads and tend to be complex. Also known are door latches which have the disadvantage of being heavy essentially owing to their complexity. Moreover, this type of connection can absorb only axial loads.

Moreover, when the hole in a first element and the hole in a second element to be assembled together are not perfectly aligned before their assembly, the introduction of an element of a connection system may present difficulties.

The invention aims to solve such technical difficulties by providing a connection system that allows a simple and efficient mechanical connection even in the face of adverse situations such as described before.

The invention proposes a connection system according to claim 1. The invention also proposes embodiments as defined in claims 2 to 13 of a connection system according to claim 1.

The invention provides a connection between elements, more specifically for connecting structural elements, for example large panels together, or a panel to a structure. The aim of the invention is for the connection system to facilitate the assembly and dismantling thereof and make it possible to absorb misalignments between the elements to be connected.

More specifically, the system according to the invention allows the connection between at least a front first element and a rear second element, each of the elements comprising a through hole for their assembly. More particularly the invention is adapted to elements with a circular cross-section assembly hole.

The threaded bolt has an elongated shape, generally cylindrical along a longitudinal direction.

Front is defined to the fore and rear is defined at the back with reference to a direction of insertion of the connection system through the holes in the first element and the second element.

A transverse cross-section is defined as a cross-section perpendicular to the longitudinal direction.

The rear transverse cross-section may correspond, for example, to an ellipse or to the intersection of two non-concentric circles. In the description, this cross-section may be designed as elliptic cross-section although it may not be exactly an ellipse. The invention is particularly beneficial when the circular cross-section assembly holes of the two elements are misaligned, and only partially intersect; that is situations in which the visible opening between a front element and a rear element has an "eye-shape" or non-null intersection of non-concentric circles.

The sleeve's outer surface transitions from its most rear cross-section to its most front cross-section. More particularly, the sleeve's outer surface transitions from an elliptic cross section in a rear portion of the sleeve to a circular cross-section in a front portion of the sleeve. From the rear of the sleeve to the front of the sleeve along its longitudinal axis, the difference between the major axis and the minor axis diminishes until they are equal and form the diameter of a circle. This allows to easily introduce the sleeve's rear portion in the open intersection between misaligned through holes in the first element and the second element. As the connection system is introduced further through the through holes (in particular as the threaded bolt progresses towards the rear part of the housing), the outer surface of the sleeve transitioning to a circular shape helps aligning the through holes of the first element and of the second element such that the first element and the second element may be aligned after the installation of a connection system according to the invention.

In some embodiments, the rear transversal cross-section has an outer shape with one or two co-vertices having the same radius as the radius of the circular front transversal cross-section.

The threaded bolt together with the fastening element have the function of transferring axial loads. The threaded bolt also creates the force required for assembly as it rotates inside the fastening element, which may be, for example, a nut. The connection element is the other element which holds the system in place and transfers the axial loads. The connection element reacts to the installation force exerted by the threaded bolt.

The sleeve transfers the shear load. During assembly of the connection system, the sleeve aligns the elements to be connected as it advances together with the threaded bolt.

The housing provides the space required for the sleeve to be housed within. In addition, the inner surface of the housing allows alignment as it may correspond to the outer shape of the sleeve. In other embodiments, the inner surface of the housing corresponds to a revolution surface around its longitudinal axis of the vertices of the sleeves, such that the sleeve may freely rotate in the housing while the vertices of the sleeve are in contact with the housing once the sleeve is in an assembled configuration.

The invention provides various advantages:
- Correction of considerable offsets between through holes, for example, drilled holes, in the elements to be connected.
- Gradual transfer of load by virtue, for example, of the structural weight, between the elements connected during assembly and dismantling. Gradual transfer is achieved through controlled tightening. When the sleeve is inserted in the through holes in the parts to be connected, the load of the connection increases as the bolt and the sleeve advance. Therefore, the alignment of the through holes occurs gradually as the connection is tightened/loosened by the sleeve.
- Can be used for multiple assembly and dismantling cycles.
- Reduces the assembly time required for prior positioning of the elements to be connected. The invention saves time and tools since it would otherwise be necessary to precisely align, beforehand, the holes in the parts to be connected.
- Lightweight assembly compared to, for example, the door opening and closure elements such as hinges, locking bolts, etc.
- Easy access for assembly and dismantling since it is not necessary to have access to both sides of the connection system as the invention makes it possible to access via the front, without being necessary to access the rear part thereof.
- Easy to inspect/maintain/repair.
- Can be used in combination with other complementary solutions.

Some specific exemplary embodiments and aspects of the invention are described in the following description in reference to the accompanying figures.
Figure 1 shows a first example embodiment in longitudinal section through a first element and a second element to be connected and a connection system in the assembled position.
Figures 2A-2D show a longitudinal cross-section of a sleeve of a connection system according to the invention, together with three different transversal cross-sections of the same sleeve.
Figures 3A-3E show a longitudinal section through a first element and a second element to be connected and a second example embodiment of a connection system according to the invention. Figures 3 shows an assembly sequence of said example embodiment of the connection system.
Figure 4 shows a longitudinal section through a third example embodiment of a first element and a second element to be connected and a connection system in the assembled position.
Figure 5 shows a perspective view of the example embodiment corresponding to Figure 3.

The figures show various example embodiments of the connection system of the invention.

The first element (1) is shown placed in a front position and the second element (2) placed in a rear position. Both elements (1, 2) have a through hole (3) for their assembly.

The first and the second element (1, 2) may be made of any material, for example, metal, composite, CFRP, etc.

The connection system shown comprises the following parts.

The threaded bolt (4) passes through the through holes (3) in the first element (1) and in the second element (2). The threaded bolt (4) comprises a rear longitudinal portion (4.1) and a front longitudinal portion (4.2).

The sleeve (5) is configured to be positioned concentrically around the threaded bolt (4) in at least the front longitudinal portion (4.2) of the threaded bolt (4). The sleeve (5) comprises an outer surface (5.1) tapered towards the rear longitudinal portion (4.1) of the threaded bolt (4).

The housing (7) is connected to the rear second element (2). The housing (7) comprises an inner face (7.1) in which the sleeve (5) is housed in its assembled position.

The fastening element (6) is threaded to the rear longitudinal portion (4.1) of the threaded bolt (4) for the attachment of the connection system.

The housing (7) is connected to the rear second element (2) using any means of connection, for example, riveting, adhesive bonding, etc.

Beneficially, the threaded bolt (4) is free to rotate within the sleeve (5). However, the sleeve and the threaded bolt (4) may be assembled to each other such that the sleeve is longitudinally connected to the threaded bolt (4) to be displaced with the threaded bolt towards or outside the housing (7). They may for example be assembled to each other with a stop ring. This connection facilitates in particular the extraction of the sleeve from the housing upon dismantlement of the connection system.

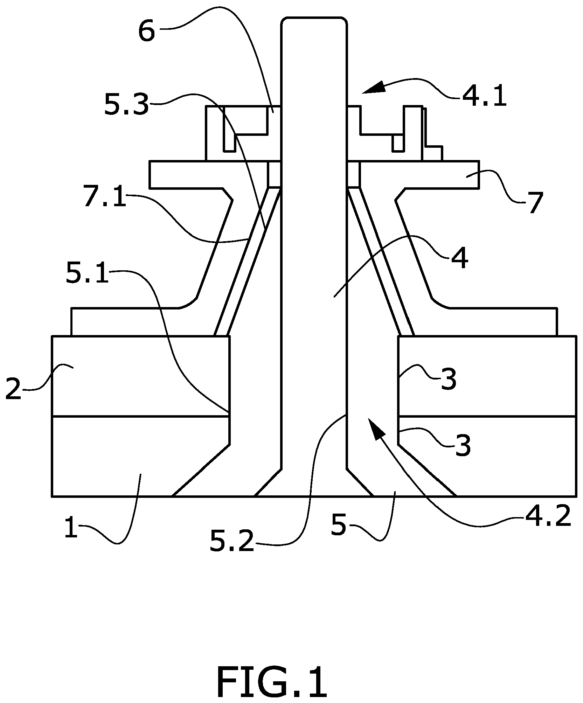

In figure 1, the fastening element (6) forms a single piece together with the housing (7). This example embodiment has the advantage of preventing the fastening element (6) from being able to fall into an inaccessible area, of an aircraft for example, and therefore improves the safety and ease of assembly of the connection system.

More specifically, in the example embodiment shown, the fastening element (6) is positioned at the rear end of the housing (7). In this embodiment, the fastening element (6) is a nut. More particularly, it corresponds to a nut embedded in the rear end of the housing (7).

In one example embodiment, the fastening element (6) is mounted on the housing (7) so as to allow a spherical rotation of the fastening element (6) with respect to the housing (7). In particular it allows spherical rotation of the fastening element (6) around two axes perpendicular to the longitudinal direction but not around the longitudinal direction.

This allows, in the initial stages of assembly, to introduced the threaded bolt (4) in an inclined position with respect to the nominal introduction direction and allows to engage the threaded bolt (4) with the fastening element despite this inclination of the threaded bolt (4). This is beneficial when the through holes in the first element (1) and the second element (2) are not misaligned.

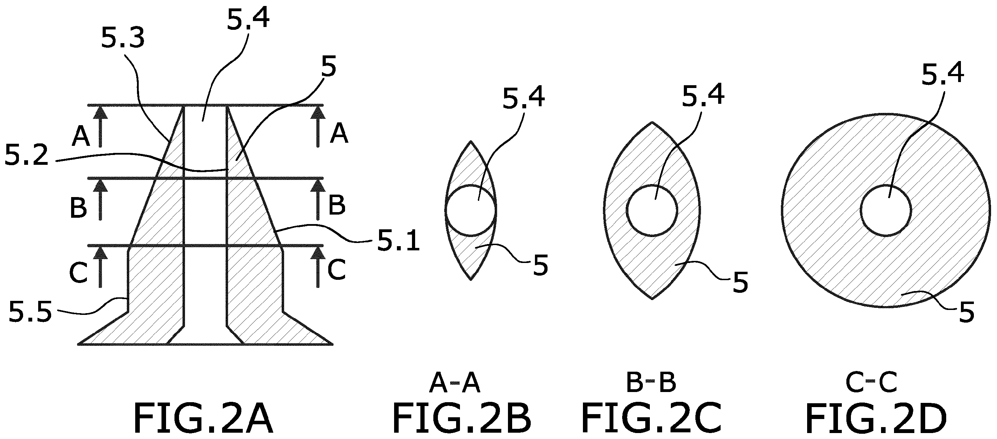

Figures 2A-2D represent a particular embodiment of a sleeve (5) of a connection system according to the invention. Various cross sections of such sleeve (5) are represented in figure 2.

A first longitudinal cross-section by a plane comprising a longitudinal access of the sleeve is represented as figure 2A. The sleeve comprises a longitudinal bore (5.4) to house the threaded bolt (4).

The sleeve (5) has a front portion with a larger width than its rear portion, forming a head adapted to come in contact with the first element (1). In its front portion, the sleeve is beneficially cylindrical. Thereby a front transverse cross section (5.5) has a circular shape.

The sleeve is tapered towards its rear portion. A rear transverse cross section (5.3) of the sleeve has a generally elliptical shape.

This transition in the shape of the sleeve between its rear portion and its front portion is represented by the successive transversal cross sections A-A in figure 2B, B-B in figure 2C and C-C in figure 2D. while section C-C has a circular outer shape, the transversal cross sections B-B and A-A have an outer shape corresponding to the intersection of two misaligned circles. The difference in size between section B-B and section A-A represents the tapered shape of the sleeve. Between section C-C and section B-B, the outer surface (5.1) of the sleeve transitions from a circular cross-section to an elliptic cross-section as seen in section B-B.

As well represented by section A-A, a connection system comprising a sleeve according to the invention allows for an easy introduction in a hole which is the intersection of a circular hole in the first element superimposed and misaligned to a circular hole in the second element.

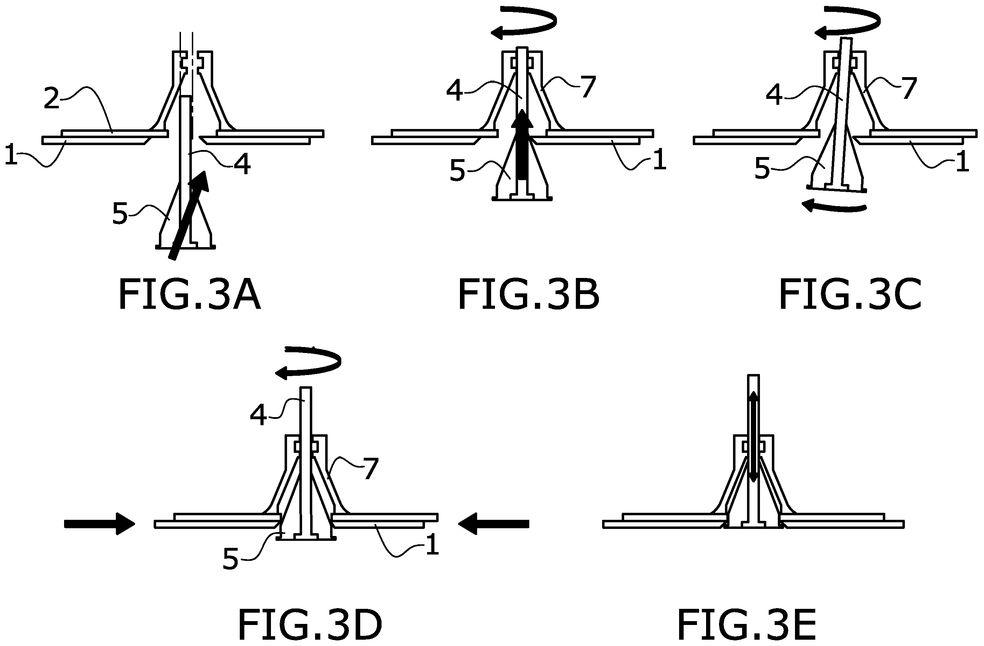

The sequence of introduction of the connection system is shown in Figures 3a-3e, in which the third and fourth images of the assembly sequence represent the threaded bolt (4) with an inclination during its introduction. The mounting of the fastening element (6) allows a certain degree of inclination of the threaded bolt (4) while at the same time allowing the threaded bolt (4) to be screwed in the fastening element (6).

Centering is achieved by the advancement of the male sleeve (5) through the through holes (3) in the elements (1, 2) to be connected and in the female housing (7) as the threaded bolt (4) advances towards the fastening element (6) at the rear of the connection system. The threaded bolt and the elements (1, 2) to be connected are placed in their nominal position by the complementarity of the sleeve (5) outer surface and the housing (7) inner surface.

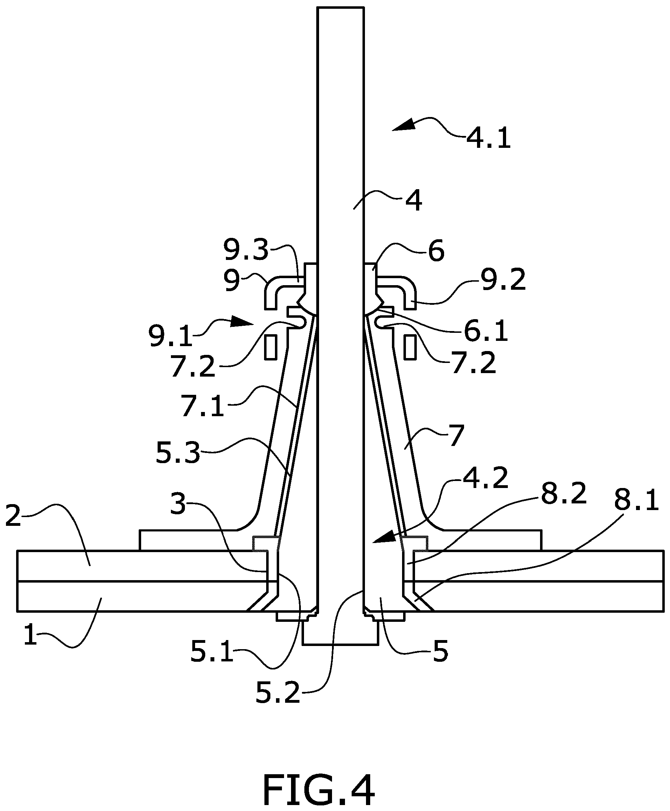

In addition, the fastening element (6) shown in Figure 4 comprises a curved front portion (6.1) which collaborates in this spherical motion.

In the example embodiment in the figures, the connection system shown may have a wear sleeve attached to the inner face (7.1) of the housing (7) to prevent said inner face (7.1) from wearing. Said wear sleeve is not shown in the figures.

In one example embodiment, shown in the figures, the fastening element (6) is configured to be positioned in the extension of the rear end of the housing (7). The housing (7) and the fastening element (6) are thus configured such that the housing (7) is positioned longitudinally between the fastening element (6) and the rear second element (2). It is therefore an element independent of the housing (7).

As mentioned above, Figures 3 describe the sequence of assembly of the connection system.

In the first figure 3A, the front first element (1) and the rear second element (2) are misaligned; in other words, their respective through holes (3) do not have the same longitudinal axis and only partially coincide. In case these through-holes are circular in shape, the open hole has an elliptical "eye-shape" formed by the intersection of the two misaligned circles. In the sequence shown it can be seen that the housing (7) is connected to the rear second element (2). The threaded bolt (4) together with the sleeve (5) are inserted from the front in the open hole forms by the intersection of the two through holes (3).

In the second figure 3B, the rear end of the threaded bolt (4) makes contact with the fastening element (6) and begins to be screwed into the latter (6). In the example embodiment shown, the distance between the rear end of the threaded bolt (4) and the rear end of the sleeve (5) is greater than the length of the housing (7). Thus, the length of the threaded bolt (4) is such that it fits in the thread of the fastening element (6) when the rear end of the sleeve (5) is still outside the through holes (3) in the elements to be connected (1, 2). As a result, the screwing action controls the longitudinal movement of the sleeve (5) though the through-holes and therefore the axial force exerted thereby on the elements to be connected (1, 2).

The third figure 3C shows the sliding and deformation between the elements to be connected (1, 2). The connection system makes it possible for an inclination between the threaded bolt (4) and the housing (7), as mentioned above, to facilitate the introduction of the threaded-bolt with its sleeve. The sleeve, with its elliptic rear portion shape also facilitates the introduction as it corresponds to the general shape of the open hole left by the intersection of the misaligned through-holes in the elements to be connected (1, 2).

In the fourth figure 3D, it can be seen that the sleeve (5) exerts a lateral force on the lateral sides of the first element (1) and of the second element (2) or on the housing 7. As a result, the through holes (3) of the second element (2) aligns with the through hole (3) in the front first element (1).

The last figure 3E shows the final configuration of the connection system in its assembled position.

In both example embodiments, the inner face (7.1) of the housing (7) has a shape adapted to house to the outer surface (5.1) of the sleeve (5), such that the two elements fit together once the connection system has been assembled.

In particular the front portion of the housing may comprise a tronco-conical portion. The front portion of the sleeve, may also comprise a tronco-conical portion. In such embodiments the inner surface of the housing matches the outer surface of the sleeve, such that they may perfectly fit together and provide a perfect alignment of the parts.

During alignment, considerable pressure may be applied to the edges of the through holes (3) in the elements (1, 2) to be connected. To prevent wear of the material, the connection system may comprise wear sleeves (8), for example, made of hard metal placed in said through holes (3) as shown, for example, in Figure 4.

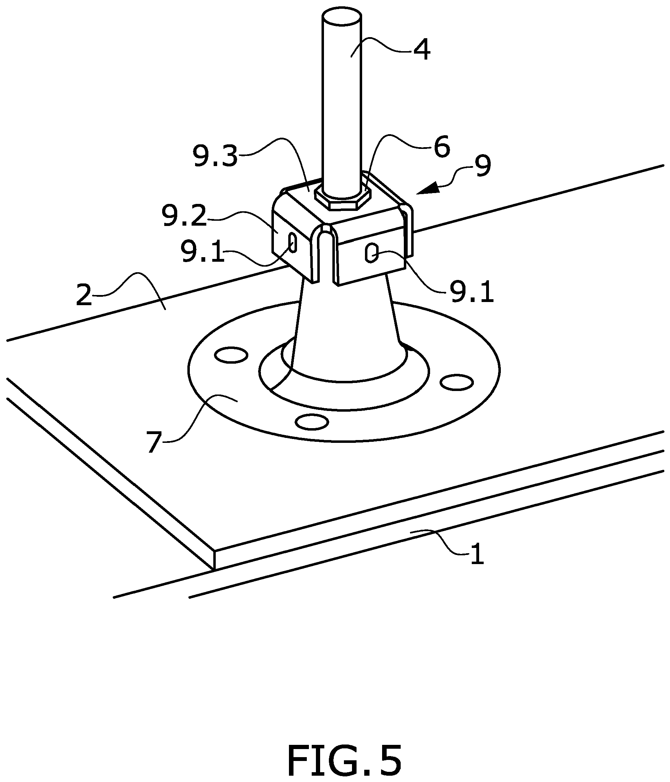

Figures 4 and 5 show an example embodiment in which the connection system comprises a retaining cap (9) in connection with the fastening element (6), for example, with a nut. The retaining cap (9) comprises means for:
- preventing said fastening element (6) from rotating about the longitudinal axis of the threaded bolt (4), and
- limiting the movement of said fastening element (6) along the longitudinal axis of the threaded bolt (4).

The retaining cap (9) thus limits the fastening element (6) both in rotation about the threaded bolt (4), and in longitudinal movement with respect to said threaded bolt (4). The retaining cap (9) serves, in a sense, as a housing for the fastening element (6).

This arrangement has advantages, for example, when dismantling the connection system, which is done from the front of the system. When dismantling, the threaded bolt (4) moves longitudinally towards the front of the connection system and, at a predetermined moment, ceases to be threaded with the fastening element (6). The retaining cap (9) acts as a housing for the fastening element (6), preventing said fastening element (6) from falling into an inaccessible area of, for example, an aircraft.

According to the example embodiment shown in the figures, the retaining cap (9) comprises a first surface (9.3) intended to be placed, in the assembly position, perpendicular to the longitudinal axis of the threaded bolt (4). Said first surface (9.3) comprises a first hole for housing the fastening element (6). In some embodiments, said first hole is complementary in shape to the non-circular shape of the fastening element (6). The retaining cap (9) thus prevents rotation of the fastening element (6) about the longitudinal axis of the threaded bolt (4). The hole in the first surface of the retaining cap may house a portion of the fastening element and the rear end portion of the threaded bolt within said fastening element.

In the example embodiment shown, the retaining cap (9) further comprises at least one second surface (9.2) intended to be placed, in the assembly position, parallel to the longitudinal axis of the threaded bolt (4). This second surface (9.2) partially longitudinally covers the fastening element (6) and the rear portion of the housing (7). The second surface (9.2) is joined to the first surface (9.3).

In the example embodiment shown, the retaining cap (9) comprises four second surfaces (9.2) as can be seen in Figure 5. Alternatively, it could comprise a single continuous second surface (9.2) surrounding the threaded bolt (4).

The second surface (9.2) comprises at least one second hole (9.1) for the insertion of a through element for connecting the retaining cap (9) to the housing (7). A screw may be inserted in said second hole (9.1), the tip of the screw being positioned in the housing (7). The retaining cap (9) is thus connected to the housing (7), preventing longitudinal movement and rotation between the two elements.

In the example embodiment shown in the figures, the housing (7) further comprises a recess (7.2) facing the second holes (9.1) in the retaining cap (9) for the insertion of the screw mentioned above.

In the example embodiment shown in Figures 4 and 5 there is a clearance (not shown) between the fastening element (6) and the retaining cap (9). Said clearance makes it possible to still allow the fastening element (6) to rotate spherically, in other words about the two axes orthogonal to the longitudinal axis. As mentioned above, this allows, in the initial stages of assembly, the threaded bolt (4) and the sleeve (5) to be inclined, allowing assembly when the holes in the first element (1) and the second element (2) are not aligned. The spherical rotation of the fastening element (6) makes it possible to connect the threaded bolt (4) and the fastening element (6) even when the threaded bolt (4) is inclined.

Lastly, in the example embodiment shown in Figures 4 and 5, the fastening element (6) comprises a front area of larger radial dimension than the rear area positioned in line with the hole in the first surface (9.3). Specifically, the curved front portion (6.1) is larger in the transverse direction than said hole. This helps to retain said fastening element (6) in the retaining cap (9) once it is separated from the threaded bolt (4). It also provides a surface for contact between the fastening element (6) and the housing (7) adapted to the case in which the threaded bolt (4) and the fastening element (6) are inclined.

The invention is not limited to the specific embodiments herein disclosed as examples.

## Claims

1. Connection system, for connection between at least a front first element (1) and a rear second element (2), each of the elements (1, 2) comprising a through hole (3), the connection system being comprising:
- a threaded bolt (4) which has a longitudinal axis and is configured to at least partially pass through the through hole (3) in the first element (1) and in the second element (2), said threaded bolt (4) comprising a rear longitudinal portion (4.1) with at least a threaded segment and a front longitudinal portion (4.2),
- a sleeve (5):
• configured to be positioned concentrically around the threaded bolt (4) in at least the front longitudinal portion (4.2) of the threaded bolt,
• configured to be introduced in the through hole (3) together with said threaded bolt (4) while allowing the threaded bolt (4) to rotate within the sleeve (5),
• tapered towards the rear longitudinal portion (4.1) of the threaded bolt
- a housing (7) configured to be connected to the rear second element (2) and adapted for housing the sleeve (5) in the assembled position of the connection system, and
- a fastening element (6) configured to be threaded to the rear longitudinal portion (4.1) of the threaded bolt (4),
**characterized in that** the sleeve (5) has an outer surface (5.1) which comprises:
- a rear transverse cross-section (5.3), towards the rear longitudinal portion (4.1) of the threaded bolt, having a major axis and a non-collinear minor axis of shorter length than the major axis.

2. Connection system according to claim 1, **characterized in that** the sleeve (5) has an outer surface (5.1) which comprises a front transverse cross-section (5.5), towards the front longitudinal portion (4.2) of the threaded bolt, with a circular shape.

3. Connection system according to claim 2, **characterized in that** the front transverse cross-section (5.5) of the front longitudinal portion (4.2) has a larger diameter than the major axis of the rear longitudinal portion (4.1).

4. Connection system according to any of the preceding claims, **characterized in that** the sleeve (5) is connected to the threaded bolt (4) so as to be displaced longitudinally together with the threaded bolt (4).

5. Connection system according to any of the preceding claims, **characterized in that** the inner face (7.1) of the housing (7) has a conical shape adapted to house the outer surface (5.1) of the sleeve (5) in any angular position around the longitudinal axis.

6. Connection system according to any of the preceding claims, **characterized in that** the distance between the rear end of the threaded bolt (4) and the rear end of the sleeve (5) is equal or greater than the length of the housing (7).

7. 6. Connection system according to any of the preceding claims, **characterized in that** the fastening element (6) is positioned at a rear end of the housing (7).

8. Connection system according to any of the preceding claims, **characterized in that** the fastening element (6) is a nut.

9. Connection system according to any of the preceding claims, **characterized in that** the fastening element (6) is attached to the housing (7) such that the longitudinal displacement of the fastening element (6) with respect to the housing (7) is restricted.

10. Connection system according to any of the preceding claims, **characterized in that** the fastening element (6) is mounted on the housing (7) so as to allow a spherical rotation of the fastening element (6) with respect to the housing (7).

11. Connection system according to any of the preceding claims, **characterized in that** the fastening element (6) comprises a curved front portion (6.1).

12. Connection system according to any of the preceding claims, **characterized in that** it comprises a retaining cap (9) adapted to be connected to the housing (7), the retaining cap (9) comprising means for:
- preventing the fastening element (6) from rotating about the longitudinal axis of the threaded bolt (4), and
- limiting the movement of the fastening element (6) along the longitudinal axis of the threaded bolt (4).

13. Connection system according to claim 12, **characterized in that** the retaining cap (9) comprises a first surface (9.3) intended to be placed, in the assembly position, perpendicular to the longitudinal axis of the threaded bolt (4) and comprising a first non-circular hole for housing the fastening element (6).

14. Connection system according to any of claim 12 or 13 , **characterized in that** the retaining cap (9) comprises at least one second surface (9.2) intended to be placed, in the assembly position, parallel to the longitudinal axis of the threaded bolt (4) such that it partially longitudinally covers the fastening element (6) and the rear portion of the housing (7), the second surface (9.2) comprising at least one second hole (9.1) for the insertion of a through element for connecting the retaining cap (9) to the housing (7).

## Patentansprüche

1. Verbindungssystem zur Verbindung zwischen mindestens einem vorderen ersten Element (1) und einem hinteren zweiten Element (2), wobei jedes der Elemente (1, 2) eine Durchgangsbohrung (3) umfasst, wobei das Verbindungssystem Folgendes umfasst:
- einen Gewindebolzen (4), der eine Längsachse aufweist und dazu ausgelegt ist, zumindest teilweise durch die Durchgangsbohrung (3) im ersten Element (1) und im zweiten Element (2) zu verlaufen, wobei der Gewindebolzen (4) einen hinteren Längsabschnitt (4.1) mit mindestens einem Gewindesegment und einen vorderen Längsabschnitt (4.2) umfasst,
- eine Hülse (5):
• die dazu ausgelegt ist, konzentrisch um den Gewindebolzen (4) in mindestens dem vorderen Längsabschnitt (4.2) des Gewindebolzens positioniert zu werden,
• die dazu ausgelegt ist, zusammen mit dem Gewindebolzen (4) in die Durchgangsbohrung (3) eingesetzt zu werden, während sich der Gewindebolzen (4) innerhalb der Hülse (5) drehen kann,
• die zum hinteren Längsabschnitt (4.1) des Gewindebolzens hin verjüngt ist,
- ein Gehäuse (7), das dazu ausgelegt ist, mit dem hinteren zweiten Element (2) verbunden zu werden und dazu ausgelegt ist, die Hülse (5) in der montierten Position des Verbindungssystems aufzunehmen, und
- ein Befestigungselement (6), das dazu ausgelegt ist, mit dem hinteren Längsabschnitt (4.1) des Gewindebolzens (4) verschraubt zu werden,
**dadurch gekennzeichnet, dass** die Hülse (5) eine Außenfläche (5.1) aufweist, die Folgendes umfasst:
- einen hinteren Querschnitt in Querrichtung (5.3) zum hinteren Längsabschnitt (4.1) des Gewindebolzens hin mit einer Hauptachse und einer nicht kollinearen Nebenachse, die kürzer als die Hauptachse ist.

2. Verbindungssystem nach Anspruch 1, **dadurch gekennzeichnet, dass** die Hülse (5) eine Außenfläche (5.1) aufweist, die zum vorderen Längsabschnitt (4.2) des Gewindebolzens hin einen vorderen Querschnitt in Querrichtung (5.5) mit kreisförmiger Form umfasst.

3. Verbindungssystem nach Anspruch 2, **dadurch gekennzeichnet, dass** der vordere Querschnitt in Querrichtung (5.5) des vorderen Längsabschnitts (4.2) einen größeren Durchmesser aufweist als die Hauptachse des hinteren Längsabschnitts (4.1).

4. Verbindungssystem nach einem der vorhergehenden Ansprüche, **dadurch gekennzeichnet, dass** die Hülse (5) zusammen mit dem Gewindebolzen (4) längsverschiebbar mit dem Gewindebolzen (4) verbunden ist.

5. Verbindungssystem nach einem der vorhergehenden Ansprüche, **dadurch gekennzeichnet, dass** die Innenfläche (7.1) des Gehäuses (7) eine konische Form aufweist, die dazu eingerichtet ist, die Außenfläche (5.1) der Hülse (5) in jeder Winkelposition um die Längsachse aufzunehmen.

6. Verbindungssystem nach einem der vorhergehenden Ansprüche, **dadurch gekennzeichnet, dass** der Abstand zwischen dem hinteren Ende des Gewindebolzens (4) und dem hinteren Ende der Hülse (5) gleich oder größer als die Länge des Gehäuses (7) ist.

7. Verbindungssystem nach einem der vorhergehenden Ansprüche, **dadurch gekennzeichnet, dass** das Befestigungselement (6) an einem hinteren Ende des Gehäuses (7) positioniert ist.

8. Verbindungssystem nach einem der vorhergehenden Ansprüche, **dadurch gekennzeichnet, dass** das Befestigungselement (6) eine Mutter ist.

9. Verbindungssystem nach einem der vorhergehenden Ansprüche, **dadurch gekennzeichnet, dass** das Befestigungselement (6) derart am Gehäuse (7) angebracht ist, dass die Längsverschiebung des Befestigungselements (6) in Bezug zum Gehäuse (7) eingeschränkt ist.

10. Verbindungssystem nach einem der vorhergehenden Ansprüche, **dadurch gekennzeichnet, dass** das Befestigungselement (6) am Gehäuse (7) montiert ist, um eine kugelförmige Drehung des Befestigungselements (6) in Bezug zum Gehäuse (7) zuzulassen.

11. Verbindungssystem nach einem der vorhergehenden Ansprüche, **dadurch gekennzeichnet, dass** das Befestigungselement (6) einen gekrümmten vorderen Abschnitt (6.1) umfasst.

12. Verbindungssystem nach einem der vorhergehenden Ansprüche, **dadurch gekennzeichnet, dass** es eine Haltekappe (9) umfasst, die dazu eingerichtet ist, mit dem Gehäuse (7) verbunden zu werden, wobei die Haltekappe (9) Einrichtungen umfasst zum:
- Verhindern, dass sich das Befestigungselement (6) um die Längsachse des Gewindebolzens (4) dreht, und
- Einschränken der Bewegung des Befestigungselements (6) entlang der Längsachse des Gewindebolzens (4).

13. Verbindungssystem nach Anspruch 12, **dadurch gekennzeichnet, dass** die Haltekappe (9) eine erste Fläche (9.3) umfasst, die dazu bestimmt ist, in der Montageposition senkrecht zur Längsachse des Gewindebolzens (4) platziert zu werden und eine erste nicht kreisförmige Bohrung zur Aufnahme des Befestigungselements (6) umfasst.

14. Verbindungssystem nach einem der Ansprüche 12 oder 13, **dadurch gekennzeichnet, dass** die Haltekappe (9) mindestens eine zweite Fläche (9.2) umfasst, die dazu bestimmt ist, in der Montageposition parallel zur Längsachse des Gewindebolzens (4) platziert zu werden, sodass sie das Befestigungselement (6) und den hinteren Abschnitt des Gehäuses (7) teilweise in Längsrichtung abdeckt, wobei die zweite Fläche (9.2) mindestens eine zweite Bohrung (9.1) zum Einsetzen eines Durchgangselements zum Verbinden der Haltekappe (9) mit dem Gehäuse (7) umfasst.

## Revendications

1. Système de raccordement, pour le raccordement entre au moins un premier élément avant (1) et un deuxième élément arrière (2), chacun des éléments (1, 2) comportant un trou traversant (3), le système de raccordement comprenant :
- un boulon fileté (4) présentant un axe longitudinal et conçu pour traverser au moins partiellement le trou traversant (3) du premier élément (1) et du deuxième élément (2), ledit boulon fileté (4) comprenant une partie longitudinale arrière (4.1) avec au moins un segment fileté et une partie longitudinale avant (4.2),
- un manchon (5) :
• conçu pour être positionné de façon concentrique autour du boulon fileté (4) au niveau au moins de la partie longitudinale avant (4.2) du boulon fileté,
• conçu pour être introduit dans le trou traversant (3) avec ledit boulon fileté (4) tout en autorisant la rotation du boulon fileté (4) à l'intérieur du manchon (5),
• effilé vers la partie longitudinale arrière (4.1) du boulon fileté
- un corps (7) conçu pour être raccordé au deuxième élément arrière (2) et adapté pour loger le manchon (5) dans la position assemblée du système de raccordement, et
- un élément de fixation (6) conçu pour être vissé sur la partie longitudinale arrière (4.1) du boulon fileté (4),
**caractérisé en ce que** le manchon (5) présente une surface extérieure (5.1) qui comprend :
- une section transversale arrière (5.3), vers la partie longitudinale arrière (4.1) du boulon fileté, présentant un grand axe et un petit axe non colinéaire de plus petite longueur que le grand axe.

2. Système de raccordement selon la revendication 1, **caractérisé en ce que** le manchon (5) comporte une surface extérieure (5.1) qui présente une section transversale avant (5.5), vers la partie longitudinale avant (4.2) du boulon fileté, de forme circulaire.

3. Système de raccordement selon la revendication 2, **caractérisé en ce que** la section transversale avant (5.5) de la partie longitudinale avant (4.2) présente un diamètre supérieur au grand axe de la partie longitudinale arrière (4.1).

4. Système de raccordement selon l'une quelconque des revendications précédentes, **caractérisé en ce que** le manchon (5) est raccordé au boulon fileté (4) de manière à être déplacé longitudinalement avec le boulon fileté (4).

5. Système de raccordement selon l'une quelconque des revendications précédentes, **caractérisé en ce que** la face intérieure (7.1) du corps (7) présente une forme conique adaptée pour loger la surface extérieure (5.1) du manchon (5) dans toute position angulaire autour de l'axe longitudinal.

6. Système de raccordement selon l'une quelconque des revendications précédentes, **caractérisé en ce que** la distance entre l'extrémité arrière du boulon fileté (4) et l'extrémité arrière du manchon (5) est égale ou supérieure à la longueur du corps (7).

7. Système de raccordement selon l'une quelconque des revendications précédentes, **caractérisé en ce que** l'élément de fixation (6) est placé à une extrémité arrière du corps (7).

8. Système de raccordement selon l'une quelconque des revendications précédentes, **caractérisé en ce que** l'élément de fixation (6) est un écrou.

9. Système de raccordement selon l'une quelconque des revendications précédentes, **caractérisé en ce que** l'élément de fixation (6) est attaché au corps (7) de telle sorte que le déplacement longitudinal de l'élément de fixation (6) par rapport au corps (7) soit limité.

10. Système de raccordement selon l'une quelconque des revendications précédentes, **caractérisé en ce que** l'élément de fixation (6) est adapté sur le corps (7) de façon à permettre une rotation sphérique de l'élément de fixation (6) par rapport au corps (7).

11. Système de raccordement selon l'une quelconque des revendications précédentes, **caractérisé en ce que** l'élément de fixation (6) comprend une partie avant incurvée (6.1).

12. Système de raccordement selon l'une quelconque des revendications précédentes, **caractérisé en ce qu'**il comporte un chapeau de retenue (9) adapté pour être raccordé au corps (7), le chapeau de retenue (9) comportant des moyens pour :
- empêcher une rotation de l'élément de fixation (6) autour de l'axe longitudinal du boulon fileté (4), et
- limiter le déplacement de l'élément de fixation (6) le long de l'axe longitudinal du boulon fileté (4).

13. Système de raccordement selon la revendication 12, **caractérisé en ce que** le chapeau de retenue (9) comprend une première surface (9.3) destinée à être placée, dans la position d'assemblage, perpendiculairement à l'axe longitudinal du boulon fileté (4) et comprenant un premier trou non circulaire pour loger l'élément de fixation (6).

14. Système de raccordement selon l'une quelconque des revendications 12 et 13, **caractérisé en ce que** le chapeau de retenue (9) comprend au moins une deuxième surface (9.2) destinée à être placée, dans la position d'assemblage, parallèlement à l'axe longitudinal du boulon fileté (4) de manière à ce qu'elle recouvre longitudinalement en partie l'élément de fixation (6) et la partie arrière du corps (7), la deuxième surface (9.2) comportant au moins un deuxième trou (9.1) pour l'insertion d'un élément traversant pour le raccordement du chapeau de retenue (9) au corps (7).
